# EUROPÄISCHE PATENTSCHRIFT

(11) **EP 0 666 045 B1**
(45) Veröffentlichungstag und Bekanntmachung des Hinweises auf die Patenterteilung: **28.07.1999**
(21) Anmeldenummer: 95810063.8
(22) Anmeldetag: 01.02.1995
(51) Int. Cl.: A47J 31/06, A47J 31/40, A47J 31/00

(54) **Kaffeemaschine**
Coffee machine
Machine à café

(30) Priorität: 07.02.1994 CH 34394
(43) Veröffentlichungstag der Anmeldung: 09.08.1995
(73) Patentinhaber: Blaser Café AG, CH-3001 Bern (CH)
(72) Erfinder: Stähli, Hans-Peter, CH-3098 Schliern (CH); Zenger, Samuel, CH-3280 Murten (CH)
(74) Vertreter: Roshardt, Werner Alfred, Dipl.-Phys.

(56) Entgegenhaltungen:
- EP-A- 0 070 403
- EP-A- 0 087 550
- EP-A- 0 387 515
- WO-A-86/02537
- GB-A- 2 020 168
- US-A- 3 511 166

## Beschreibung

Kaffeemaschinen für Flugzeuge müssen so konzipiert sein, dass sie bei geringem Platzbedarf und Bedienungsaufwand eine möglichst grosse Menge an gutem Kaffee produzieren können. Das Handling soll möglichst einfach sein und nicht zu schmutzigen Händen führen.

Es ist unter anderem eine Kaffeemaschine bekannt, bei welcher das Kaffeepulver in einer Aluminiumdose verpackt einsetzbar setzbar ist. Eine Düse wird von oben durch den Deckel gestossen. Gleichzeitig werden in den Boden mehrere Spitzen eingetrieben, die das Abfliessen des Kaffees ermöglichen. Mit der Düse wird heisses Wasser in die Dose eingespritzt. Es mischt sich mit dem Kaffeepulver und löst die Aromastoffe heraus. Durch die Schlitze zwischen den Spitzen und dem durchdrungenen Dosenboden kann das Kaffeewasser abfliessen, um in einem Behälter gesammelt zu werden. Mit einer Dose können auf diese Weise mehrere Liter Kaffee hergestellt werden. Nach Gebrauch wird die Dose mit dem gebrauchten Kaffee als ganzes aus der Maschine herausgenommen und weggeworfen.

Diese Lösung ist zwar sehr sauber, aber wegen der grossen Abfallmenge nicht besonders umweltfreundlich. Ferner ist das Gewicht der Wegwerfdose angesichts der von den Fluggesellschaften benötigten grossen Mengen an Kaffee alles andere als vernachlässigbar.

Die US-A-3,511,166 beschreibt eine Kaffeemaschine, bei welcher der Filterbeutel rechteckig ist und von der Grösse so bemessen ist, dass er im wesentlichen flach in das Sieb gelegt werden kann. Das Sieb hat die Form eines flachen viereckigen Trichters. Beim Zuführen des heissen Wassers bläht sich der Filterbeutel auf. Die Druckplatte ist nicht starr, sondern verschiebbar und gibt infolgedessen dem aufblähenden Filterbeutel nach. Der Druck der Druckplatte sorgt dafür, dass kein Zwischenraum zwischen Filterbeutel und Druckplatte besteht.

### Darstellung der Erfindung

Aufgabe der Erfindung ist es, ein System gemäss Oberbegriff des Anspruchs 1 anzugeben, das ein einfaches, sauberes Handling ermöglicht, die beim Stand der Technik vorhandenen Abfallprobleme vermeidet und den Kaffee optimal ausnutzt.

Die erfindungsgemässe Lösung ergibt sich aus den Merkmalen des Kennzeichens des Anspruchs 1.

Eine erfindungsgemässe Kaffeemaschine weist einen druckdicht verschliessbaren Behälter zur Aufnahme von Kaffeepulver auf, wobei der Behälter innenseitig an Boden und Seitenwand ein Sieb aufweist, um das Kaffeepulver in einem geschlossenen Filterbeutel aufnehmen zu können, und dabei dem Kaffee das Abfliessen zu ermöglichen.

Die Erfindung basiert also nicht mehr auf den materialaufwendigen Einwegdosen, sondern setzt auf die verpackungsmässig sehr umweltfreundlichen Filterbeutel. Ein solcher enthält eine grössere Menge an Kaffee (z. B. 100-400 g), so dass mit ihm mehrere Liter guten Kaffees hergestellt werden können. Aehnlich wie beim bekannten Wegwerfdosensystem kommt auch bei der Erfindung das Personal mit dem Kaffeepulver nicht in Berührung. Das Kaffeepulver kann also nicht verschüttet werden.

Das erfindungsgemässe Sieb ist nicht zu verwechseln mit einem Filter. Es dient nämlich nicht dazu, den Kaffee zu filtern, sondern nur den Filterbeutel so zu halten, dass der (aus dem Filterbeutel heraustretende) Kaffee aussenseitig gut abfliessen kann, so dass das Heisswasser nicht daran gehindert ist, durch den Filterbeutel hindurch zu dringen. Kann nämlich das Heisswasser nicht den genannten Weg gehen, wird es irgendwo um den Filterbeutel herumfliessen, was zu einem wässerigen Kaffee führen wird.

Vorzugsweise ist das Sieb innenseitig achsen- bzw. rotationssymmetrisch ausgebildet. Dies gewährleistet eine gleichbleibende Kaffeequalität, da der Filterbeutel gleichmässig an der Siebinnenseite verteilt werden kann. Vorzugsweise ist der Behälter zylindrisch (pfannenförmig) und mit einem Deckel verschliessbar, der innenseitig einen Düsenkopf zum Einspritzen von heissem Wasser aufweist. Der Deckel ist in der Kaffeemaschine befestigt und höchstens zu Revisionszwecken herausnehmbar. Für die Bedienung der Kaffeemaschine ist nur die Pfanne aus ihr herauszunehmen.

Vorzugsweise ist ein manueller oder automatischer Mechanismus vorgesehen, um die Pfanne gegen den Deckel anzuheben und die beiden Teile druckdicht zu schliessen. Auf diese Weise kann die Erfindung ohne wesentliche Veränderung der bestehenden bekannten Kaffeemaschine angewendet werden. Die Einführung des erfindungsgemässen Systems zieht also keine grossen Investitionen nach sich.

Selbstverständlich ist nicht ausgeschlossen, dass der Deckel auf die Pfanne abgesenkt wird.

Die Pfanne ist vorzugsweise einteilig. Das Sieb soll sich also nicht lösen können, wenn der gebrauchte Filterbeutel aus der Pfanne herausgeschlagen wird.

Anders als bei der vorbekannten Maschine sind Düsen mit einem Winkel von ca. 45° (statt 90° wie beim Stand der Technik) bezüglich der Mittelachse des Deckels bevorzugt. Sie sorgen dafür, dass der eingelegte Filterbeutel vom Wasser möglichst von innen nach aussen durchdrungen wird. Auch diese Massnahme trägt zu einer gleichbleibend guten Kaffeequalität bei.

Ein Filterbeutel mit Kaffeepulver zur Verwendung bei einer Kaffeemaschine der erfindungsgemässen Art ist flach und rund. Er ist nur teilweise (jedoch nicht prall) mit Kaffee gefüllt. Sein Durchmesser ist grösser als der Durchmesser der Pfanne, so dass er nicht nur den Boden der Pfanne, sondern auch deren Wand abdecken kann. Wieviel grösser der Durchmesser des Filterbeutels sein soll hängt vom Verhältnis Höhe zu Durchmesser der Pfanne ab.

Die Erfindung eignet sich insbesondere zur Realisierung bei Einbaukaffeemaschinen in Flugzeugen, die mit einem direkten Anschluss an das Druckwasserleitungssystem ausgebildet sind. Das Druckleitungssystem hat einen Arbeitsdruck von z. B. 1 bar. Der Behälter für den Filterbeutel muss auf diesen Druck ausgelegt sein. Selbstverständlich sind auch andere gewerbliche Anwendungen (in Kantinen, bei Kongressen etc.) denkbar.

Um den Filterbeutel, der viel grösser als der Durchmesser der Pfanne ist, in die Pfanne zu bringen, wird er vorzugsweise zunächst zentral auf die Pfanne gelegt und dann in der Mitte nach unten (in die Pfanne) gedrückt. Der Beutel wird dann (rundum) an der Innenwand anliegen und in der Mitte einen Freiraum für den Düsenkopf bilden.

Weitere vorteilhafte Ausführungsformen und Merkmalskombinationen ergeben sich aus der Detailbeschreibung und der Gesamtheit der Patentansprüche.

### Kurze Beschreibung der Zeichnungen

Nachfolgend soll die Erfindung anhand von Ausführungsbeispielen und in Zusammenhang mit den Zeichnungen näher erläutert werden. Es zeigen:
- Fig. 1a, b: eine schematische Darstellung einer Einbaukaffeemaschine mit der Pfanne im abgesenkten bzw. angehobenen Zustand;
- Fig. 2a, b: eine schematische Darstellung der Pfanne mit aufgelegtem bzw. eingefügtem Filterbeutel;
- Fig. 3: eine erfindungsgemässe Pfanne ohne Siebeinsatz im Schnitt;
- Fig. 4: ein Siebeinsatz für die Pfanne gemäss Fig. 3.

Grundsätzlich sind in den Zeichnungen gleiche Teile mit gleichen Bezugszeichen versehen.

### Wege zur Ausführung der Erfindung

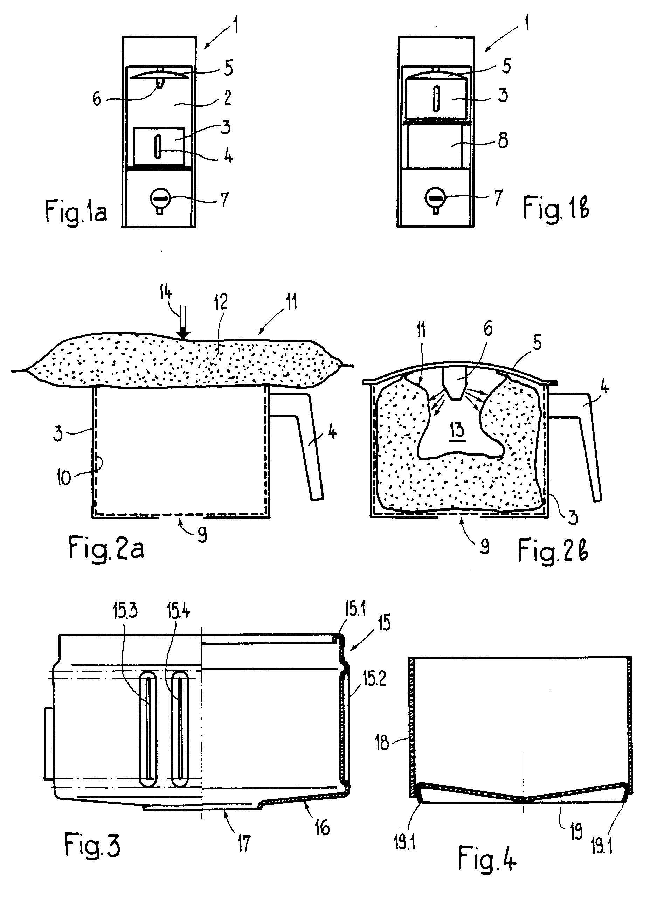

Fig. 1a, b zeigt eine erfindungsgemässe Einbaukaffeemaschine 1 von vorne. In einem nach vorne offenen Innenraum 2 befindet sich fest montiert ein Deckel 5 mit einem zentral angeordneten Düsenkopf 6. Der Deckel 5 ist an der Decke resp. im oberen Bereich des Innenraums 2 befestigt. Eine Pfanne 3 mit einem Griff 4 ist in den Innenraum 2 einführbar resp. aus ihm entnehmbar. Sie sitzt auf einem Hebemechanismus 8. In Fig. 1a ist der Hebemechanimsmus 8 abgesenkt und daher nicht sichtbar. Die Pfanne 3 kann herausgenommen und mit einem Filterbeutel 11 (vgl. Fig. 2a, b) gefüllt werden.

Im unteren Teil verfügt die Kaffeemaschine 1 über einen Auslasshahn 7, an welchem der fertige Kaffee abgezapft werden kann.

Wird der Hebemechanismus 8 betätigt, dann wird die Pfanne 3 nach oben gegen den Deckel 5 angehoben, bis Pfanne 3 und Deckel 5 einen dichtgeschlossenen Behälter bilden. In diesem Zustand wird heisses Wasser durch den Düsenkopf 6 eingespritzt und unten an der Pfanne 3 der fertige Kaffee gesammelt. (Die Kaffeemaschine 1 ist in an sich bekannter Weise an einem Wasserversorgungssystem resp. einer Druckwasserleitung angeschlossen.)

Fig. 2a, b zeigt, wie ein erfindungsgemässer Filterbeutel 11 in die Pfanne 3 eingelegt wird. Beim Filterbeutel 11 handelt es sich um einen grossen runden, flachen, locker mit Kaffeepulver 12 gefüllten Beutel aus Filterpapier oder dergleichen. Der Durchmesser des Filterbeutels 11 ist grösser als derjenige der zylindrischen Pfanne 3. In einem ersten Schritt wird deshalb der Filterbeutel 11 zentral auf den oberen Rand der Pfanne 3 gelegt (vgl. Fig. 2a). Dann wird er in der Mitte in die Pfanne 3 gedrückt (Pfeil 14) und an Boden und Wand der Pfanne 3 resp. deren innenseitigem Sieb 10 angelegt. Boden und Wand des Behälters sollen durch den Filterbeutel 11 vollständig ausgekleidet sein. Im Zentrum bleibt ein Freiraum 13 bestehen. In diesem verspritzt der Düsenkopf 6 das heisse Wasser. Indem einerseits die Pfanne 3 innenseitig ganzflächig mit einem Sieb 10 ausgerüstet ist und andererseits der Filterbeutel 11 Boden und Wand der Pfanne 3 ganz abdeckt, bleibt dem eingespritzten Heisswasser nichts anderes übrig, als durch den Filterbeutel 11 hindurch nach aussen zu dringen. Es sammelt sich ausserhalb des Siebes 10 und fliesst durch ein zentrales Loch 9 im Boden der Pfanne 3 ab.

Ist die gewünschte Menge Kaffee hergestellt, wird der Hebemechanismus 8 abgesenkt, die Pfanne 3 entnommen und der nasse Filterbeutel 11 herausgenommen (z. B. durch Schlagen des Randes der Pfanne 3 gegen den Rand eines Mülleimers).

Fig. 3 zeigt eine bevorzugte Ausführungsform einer erfindungsgemässen Pfanne. Sie weist einen zylindrischen Mantel 15 und einen konisch abgeschrägten Boden 16 auf. Am oberen Rand weist der Mantel 15 einen nach innen und unten umgebogenen Rand 15.1 auf. Entlang des Umfangs verteilt sind ferner in axialer Richtung laufende Rippen 15.2, 15.3, 15.4 in den Mantel 15 eingeformt.

Im Zentrum weist der Boden 16 schliesslich eine Oeffnung 17 auf.

In die Pfanne gemäss Fig. 3 ist einerseits ein Mantelsieb 18 (vgl. Fig. 4) und andererseits ein Bodensieb 19 einzusetzen. Das Mantelsieb 18 wird durch den umgebogenen Rand 15.1 in der Pfanne gehalten. Das Bodensieb 19 vertieft sich ähnlich wie der Boden 16 vom äusseren Rand gegen das Zentrum hin.

Mantelsieb 18 und Bodensieb 19 bestehen z. B. aus einem 1 mm dicken Blech mit Sieblöchern in der Grössenordnung von 0,5 bis 2 mm Durchmesser. Die Rippen 15.2, ..., 15.4 halten das Mantelsieb 18 in einem minimalen Abstand zum Mantel 15, so dass der Kaffee abfliessen kann. Das Bodensieb 19 wird z. B. durch einen nach unten umgebogenen Rand 19.1 im Abstand zum Boden 16 gehalten.

Die Pfanne hat typischerweise einen Durchmesser von 10-15 cm und eine Höhe von 5-10 cm. Mit einem solchen Volumen lassen sich bei der Erfindung 3-4 Liter Kaffee herstellen.

Die Erfindung beschränkt sich nicht auf die beschriebene Ausführungsform. So braucht die Pfanne nicht unbedingt zylindrisch zu sein. Sie kann insbesondere auch leicht konisch sein. Um den Behälter zu schliessen, kann der Deckel durch einen Absenkmechanismus auf die Pfanne gebracht werden. Deckel und Pfanne können miteinander über ein Scharnier verbunden sein. Dies ist allerdings etwas nachteilig für das Handling.

Indem das Kaffeepulver in einem sehr feinporigen Filterbeutel eingeschlossen ist, kann es feiner als beim Stand der Technik gemahlen werden. Bei gleichbleibender Kaffeequalität kann etwa 10% des Pulvers eingespart werden.

Da die Erfindung ohne Aluminiumdosen auskommt, ergibt sich eine Gewichtsersparnis, die vor allem bei grossen Mengen an Kaffee zu Buche schlägt. Die Gewichtsersparnis beschränkt sich nicht nur auf das bereitzustellende Material, sondern auch auf den Abfall. Schliesslich kostet die Herstellung und Entsorgung von Filterbeuteln viel weniger Energie als diejenige von Aluminiumdosen.

Zusammenfassend kann festgehalten werden, dass durch die Erfindung ein umweltschonendes System zur Herstellung von grossen Mengen von Kaffee geschaffen worden ist.

## Patentansprüche

1. System zum Herstellen von Filterkaffee, umfassend eine Kaffeemaschine (1) und einen Filterbeutel mit Kaffeepulver, wobei die Kaffeemaschine (1) zur Aufnahme des Filterbeutels einen druckdicht verschliessbaren Behälter (3) aufweist, welcher innenseitig an Boden und Seitenwand (16 bzw. 15) mit einem Sieb (10; 18, 19) ausgestaltet ist, um dem Kaffee das Abfliessen zu ermöglichen, dadurch gekennzeichnet, dass das Sieb zylindrisch ist und dass der Filterbeutel flach und rund ist und einen Durchmesser hat, der wesentlich grösser als der Durchmesser des Behälters und entsprechend dem Verhältnis von Höhe zu Durchmesser des Behälters so bemessen ist, dass Boden und Seitenwand des Behälters im wesentlichen vollständig abgedeckt werden können, und in der Mitte gleichzeitig ein Freiraum vorhanden ist.

2. System nach Anspruch 1, dadurch gekennzeichnet, dass der Behälter (3) eine mit einem Deckel (5) abdichtbare Pfanne aufweist, und dass der Deckel (5) in der Kaffeemaschine (1) fixiert ist, und bei der Kaffeeherstellung nur die Pfanne aus der Kaffeemaschine (1) herausnehmbar ist.

3. System nach Anspruch 2, dadurch gekennzeichnet, dass die Kaffeemaschine (1) einen Mechanismus (8) aufweist, um die Pfanne gegen den Deckel (5) anzuheben und zu pressen.

4. System nach einem der Ansprüche 2 oder 3, dadurch gekennzeichnet, dass die Pfanne und das Sieb (10) einteilig sind.

5. System nach einem der Ansprüche 2 bis 4, dadurch gekennzeichnet, dass der Deckel (5) mit einem innenseitigen Düsenkopf (6) ausgerüstet ist, welcher zum Einspritzen von heissem Wasser in den durch den Filterbeutel gebildeten Freiraum ausgebildet ist.

6. System nach Anspruch 5, dadurch gekennzeichnet, dass der Düsenkopf (6) mehrere, etwa im 45°-Winkel zur Mittelachse des Deckels (5) ausgerichtete Düsen aufweist.

7. System nach einem der Ansprüche 1 bis 6, dadurch gekennzeichnet, dass die Kaffeemaschine (1) als Einbaumaschine insbesondere für Flugzeuge mit direktem Anschluss an ein Druckwasserleitungssystem ausgebildet ist.

8. Verfahren zum Betreiben eines Systems nach Anspruch 1, welches eine Kaffeemaschine (1) und einen Filterbeutel mit Kaffeepulver umfasst, wobei die Kaffeemaschine (1) zur Aufnahme des Filterbeutels einen druckdicht verschliessbaren Behälter (3) aufweist, welcher innenseitig an Boden und Seitenwand (16 bzw. 15) mit einem zylindrischen Sieb (10; 18, 19) ausgestaltet ist, um dem Kaffee das Abfliessen zu ermöglichen, und wobei der Filterbeutel flach und rund ist, dadurch gekennzeichnet, dass ein Filterbeutel mit einem Durchmesser, der wesentlich grösser als der Durchmesser des Behälters ist, auf die Pfanne gelegt und zuerst in der Mitte hineingedrückt (14) wird, so dass der Filterbeutel, dessen Durchmesser entsprechend dem Verhältnis von Höhe zu Durchmesser des Behälters so bemessen ist, dass Boden und Seitenwand des Behälters im wesentlichen vollständig abgedeckt werden können, rundum an der Innenwand angelegt wird, wobei in der Mitte ein Freiraum (13) belassen wird.

## Claims

1. System for making filter coffee, including a coffee machine (1) and a filter bag with coffee powder, in which the coffee machine (1) comprises, for holding the filter bag, a container (3) which is closable in a pressure-tight manner and which is equipped internally, on the base and on the side wall (16 and 15), with a strainer (10; 18, 19) for allowing the coffee to flow out, characterized in that the strainer is cylindrical and in that the filter bag is flat and round and has a diameter which is substantially larger than the diameter of the container and which is determined according to the ratio of height to diameter of the container, in a manner such that the base and the side wall of the container can be substantially completely covered and, at the same time, there is a free space in the middle.

2. System according to Claim 1, characterized in that the container (3) comprises a vessel which can be sealed by a lid (5), and in that the lid (5) is fixed in the coffee machine (1) and, upon coffee-making, only the vessel can be removed from the coffee machine (1).

3. System according to Claim 2, characterized in that the coffee machine (1) comprises a mechanism (8) for lifting and pressing the vessel against the lid (5).

4. System according to Claim 2 or Claim 3, characterized in that the vessel and the strainer (10) are formed in one piece.

5. System according to any one of Claims 2 to 4, characterized in that the lid (5) is equipped with an internal nozzle head (6) which is designed for spraying hot water into the free space formed by the filter bag.

6. System according to Claim 5, characterized in that the nozzle head (6) comprises a plurality of nozzles arranged at an angle of approximately 45° to the central axis of the lid (5).

7. System according to any one of Claims 1 to 6, characterized in that the coffee machine (1) is designed as a machine to be built-in, particularly for aircraft, with direct connection to a pressure water-supply system.

8. Method of operating a system according to Claim 1, which includes a coffee machine (1) and a filter bag with coffee powder, in which the coffee machine (1) comprises, for holding the filter bag, a container (3) which is closable in a pressure-tight manner and which is equipped internally, on the base and on the side wall (16 and 15), with a cylindrical strainer (10; 18, 19) for allowing the coffee to flow out, and in which the filter bag is flat and round, characterised in that a filter bag with a diameter which is substantially larger than the diameter of the container is placed on the vessel and first of all is pushed in in the middle (14), so that the filter bag, the diameter of which is determined according to the ratio of height to diameter of the container in a manner such that the base and the side wall of the container can be substantially completely covered, is placed around the inner wall, a free space (13) being left in the middle.

## Revendications

1. Système pour la préparation d'un café filtre, comprenant une machine à café (1) et un sachet filtrant avec du café en poudre, la machine à café (1) destinée à recevoir la sachet filtrant comportant un récipient (3) pouvant être fermé hermétiquement, résistant à la pression, récipient qui est muni d'une passoire ou tamis (10;18,19) à l'intérieur, sur le fond et sur la paroi latérale (16 ou 15) pour permettre au café de s'écouler, système caractérisé en ce que la passoire est cylindrique et en ce que le sachet filtrant est plat et rond et présente un diamètre qui est sensiblement supérieur au diamètre du récipient et en fonction du rapport entre la hauteur et le diamètre du récipient est dimensionné de telle sorte que le fond et la paroi latérale du récipient peuvent être sensiblement entièrement recouverts et en même temps, il est prévu un espace libre dans le milieu.

2. Système selon la revendication 1, caractérisé en ce que le récipient (3) présente une casserole pouvant être fermée hermétiquement par un couvercle (5), et en ce que le couvercle (5) est fixé dans la machine à café (1) et pour la préparation du café, seule la casserole doit être enlevée de la machine à café (1).

3. Système selon la revendication 2, caractérisé en ce que la machine à café (1) comporte un mécanisme (8) afin de relever et de comprimer la casserole contre le couvercle (5).

4. Système selon les revendications 2 ou 3, caractérisé en ce que la casserole et la passoire (10) sont d'un seul tenant.

5. Système selon l'une des revendications 2 à 4, caractérisé en ce que le couvercle (5) est équipé d'une tête de pulvérisation (6) interne qui est conçu pour pulvériser de l'eau chaude dans l'espace libre formé par le sachet filtrant.

6. Système selon la revendication 5, caractérisé en ce que la tête de pulvérisation (6) comporte plusieurs tuyères dirigées sensiblement selon un angle de 45° par rapport à l'axe médian du couvercle (5).

7. Système selon l'une des revendications 1 à 6, caractérisé en ce que la machine à café (1) est conçue comme machine encastrable, destinée en particulier pour les avions avec un raccordement direct sur un système de distribution d'eau sous pression.

8. Procédé pour l'exploitation d'un système selon la revendication 1, qui comprend une machine à café (1) et un sachet filtrant avec du café en poudre, la machine à café (1) présentant un récipient (3) pouvant être fermé de façon hermétique pour recevoir le sachet filtrant, récipient qui est équipé intérieurement sur le fond et la paroi latérale (16 ou 15) d'une passoire cylindrique (10; 18,19), pour permettre au café de s'écouler et la sachet filtrant étant rond et plat, caractérisé en ce qu'un sachet filtrant a un diamètre sensiblement supérieur au diamètre du récipient est appliqué contre la casserole et enfoncé dans la partie centrale (14) de sorte que le sachet filtrant dont le diamètre de façon correspondante au rapport entre la hauteur et le diamètre du récipient est dimensionné afin que le fond et la paroi latérale du récipient puissent être sensiblement entièrement recouverts, est appliqué sur le pourtour de la paroi interne, un espace libre (13) étant ainsi ménagé au centre.
